# EUROPEAN PATENT APPLICATION

(11) **EP 2 477 142 A1**
(43) Date of publication of application: **18.07.2012**
(21) Application number: 11290023.8
(22) Date of filing: 17.01.2011
(51) Int. Cl.: G06Q 10/00

(54) **Method of managing resources**

(71) Applicant: Alcatel Lucent, 75007 Paris (FR)
(72) Inventor: Parladori, Giorgio, 20129 Milan (IT); Donadio, Pasquale, 80129 Naples (IT)
(74) Representative: Wetzel, Emmanuelle

(57) **Abstract**

Method of managing a plurality of resources, the method comprising forming a cluster by aggregating the resources, provisioning the cluster, monitoring the cluster, gathering information on the cluster, and releasing the resources by disaggregating the cluster

## Description

### Field of the Invention

The invention relates to a method of managing resources.

### Background

This section introduces aspects that may be helpful in facilitating a better understanding of the invention. Accordingly, the statements of this section are to be read in this light and are not to be understood as admissions about what is in the prior art or what is not in the prior art.

In the context of computer networking, network management refers to the activities, methods, procedures, and tools that pertain to the operation, administration, maintenance, and provisioning of networked systems. On the other hand, information technology management is concerned with exploring and understanding information technology (IT) as a corporate resource that determines both the strategic and operational capabilities of an enterprise in designing and developing products and services for maximum customer satisfaction, corporate productivity, profitability, and competitiveness. More specifically, IT service management (ITSM), also known as IT services, is an IT management discipline that is philosophically centered on a customer's perspective of how IT may contribute to his or her business.

A major downside of conventional network management lies in its lack of support for ITSM.

### Summary

The present invention was made in view of the prior art described above, and the object of some embodiments is to provide a practical method based on an integrated approach to network management and ITSM.

According to an embodiment there is provided a method of managing a plurality of resources, the method comprising forming a cluster by aggregating the resources, provisioning the cluster, monitoring the cluster, gathering information on the cluster, and releasing the resources by disaggregating the cluster.

### Brief Description of the Figures

Some embodiments of apparatus and/or methods in accordance with embodiments of the present invention are now described, by way of example only, and with reference to the accompanying drawing, in which:

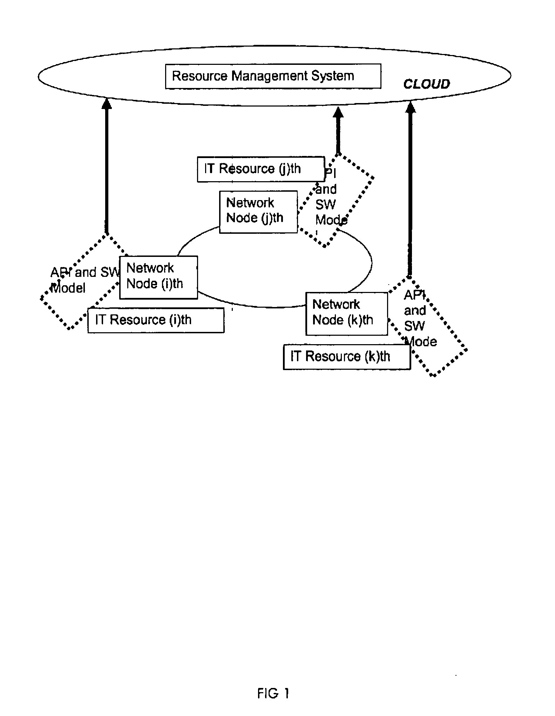

Figure 1 schematically illustrates a cloud resource management system architecture.

### Description of the Embodiments

Hereinafter, the best mode for carrying out a method according to an embodiment is described in detail.

According to this embodiment, the method is performed by a resource management system (RMS) solution that sees a completely integrated workflow, starting from network design and planning and covering network exercise. The basic components of the system are modeled and export a standard interface which also allows the virtualization of the physical resources.

Starting from a network design (RMS uses only resource model to derive a solution for given requirements), the output drives the physical deployment of the resources.

To orchestrate the resources of the cloud, the RMS comprises a ubiquitous resource manager that act as glue technologies between the networks design/planning and the physical resource provisioning (see red boxes in Figure 1). Main functionalities of the resource manager are:
- Physical infrastructure construction, in the sense that it operates the aggregation of heterogeneous resources (Optical + IT) in order to identify the physical infrastructure suitable for the requested service development and deployment
- Update Resource database, that permits to track used/available resources of the cloud (IT, Telco, Topology) in any phase of the resource management lifecycle
- Operating Management, that provides the full set of facilities act to monitors the cloud resources and modify the functional destination (e.g. de-aggregation, residue, etc.)

In this way, the Network and IT resources operation and management activity starts and evolves in a transparent way respect to the physical infrastructure. The network evolution process is straightforward.

The RMS uses the Ubiquitous Resource Manager to manage the resources in the optimal way.

The Ubiquitous Resource Manager (U-RM), represents the glue technology between the cloud RMS and the physical resource (Optical + IT). It implements a collaborative architecture in which the Resource Management Interface receive service requests from cloud RMS and ask U-RMs located in the management plane to mange resources that satisfy the RMS's requests. U-RMs manages resources using information stored in their Resource Database (RD), whereas Optical + IT resources are managed by interacting with U-RM of other domains.

To manage a multi-domain resource, the U-RM sends a resource management request to the U-RM along a pre-selected chain of domains to the destination, asking them for information about resource available in their domains satisfying a set of constraints.

The resource management request will includes the following set of messages:
- Aggregation, that permits to aggregate different resources building a new resource cluster (RC)
- Provisioning, that permits to configure and activate the RC
- Releasing, that permits to destroy the cluster acting a garbage collection of the residue resources
- Monitoring, that permits to monitors all information related to the resource cluster (free/used resource percentage, power consumption, and so on) acting two different modality of data collection: push and pull
- Prediction, that permits to retrieve statistical information about the lifecycle of the resource cluster.

The U-RM of the destination domain issues resource management response that arrives to the source U-RM following the path of the relative request and each domain inserts information about new resource management inside their resource database in order to satisfy the request of the cloud Resource Management System. To do so, each intermediate domain intercepts the resource management response, reads the list of resources described in this response and manages local resources that extend the RMS issued by the downstream domain till the border nodes connected to the upstream domain.

The U-RM is a cloud-oriented resource management stack that will be integrated in a TMN-based environment on a dedicated workstation, or embedded in the Optical + IT equipment (e.g. Network Element). In the latter case, the U-RM will be embedded in a network management unit (NMU), an hardware component based on Von Neumann model. Basic components of the NMU are:
- Multi-core processor
- Disk storage unit
- Volatile memory unit
- Cloud based operative system

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description merely illustrates the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method of managing a plurality of resources, the method comprising forming a cluster by aggregating the resources, provisioning the cluster, monitoring the cluster, gathering information on the cluster, and releasing the resources by disaggregating the cluster.

2. Method as in claim 1 comprising the additional step of sharing at least one of the resources by means of a telecommunications network.

3. Method as in claim 2 comprising the additional step of planning and designing the telecommunications network.

4. Method as in any of the preceding claims comprising the additional step of requesting at least one of the resources by means of the Internet.

5. Method as in any of the preceding claims comprising the additional step of allowing access to at least one of the resources through a software interface.

6. Method as in any of the preceding claims wherein at least one of the resources is physical and the method comprises the additional step of virtualizing the physical resource.

7. Method as in any of the preceding claims comprising the additional step of providing a service based on at least one of the resources.

8. Method as in claim 7 comprising the additional step of deploying the service.

9. Method as in claim 7 or 8 comprising the additional step of orchestrating the service.

10. Method as in any of the preceding claims comprising the additional step of maintaining a database of resources.

11. Method as in claim 10 wherein the database is configured to store usage information on at least one of the resources.Abstract
